# EUROPÄISCHE PATENTSCHRIFT

(11) **EP 1 315 769 B1**
(45) Veröffentlichungstag und Bekanntmachung des Hinweises auf die Patenterteilung: **19.01.2005**
(21) Anmeldenummer: 01984567.6
(22) Anmeldetag: 01.09.2001
(51) Int. Cl.: C08G 63/80

(54) **VERFAHREN ZUM ERHÖHEN DES MOLEKULARGEWICHTS EINES POLYMERGRANULATS**
METHOD FOR INCREASING THE MOLECULAR WEIGHT OF A POLYMER GRANULATE
PROCEDE PERMETTANT D'AUGMENTER LE POIDS MOLECULAIRE D'UN GRANULAT POLYMERE

(30) Priorität: 02.09.2000 DE 10043277
(43) Veröffentlichungstag der Anmeldung: 04.06.2003
(73) Patentinhaber: Zimmer Aktiengesellschaft, 60388 Frankfurt am Main (DE)
(72) Erfinder: KIRSTEN, Klaus, 55130 Mainz (DE)
(74) Vertreter: Meyer-Dulheuer, Karl-Hermann, Dr.
(86) Internationale Anmeldenummer: PCT/EP2001/010096
(87) Internationale Veröffentlichungsnummer: WO 2002/018470

(56) Entgegenhaltungen:
- AT-B- 395 013
- DE-A- 1 770 410
- DE-B- 1 243 389
- US-A- 4 374 975

## Beschreibung

Die Erfindung betrifft ein Verfahren zum Erhöhen des Molekulargewichts eines Polymergranulats, das aus einer Polykondensationsanlage kommt, mindestens teilweise kristallisiert wird und in einer Nachkondensation mit einem stickstoffhaltigen Behandlungsgas in direkten Kontakt gebracht wird, wobei die Temperatur des Polymergranulats in der Nachkondensation gegenüber dem aus der Polykondensationsanlage kommenden Granulat auf 175 bis 250°C erhöht wird. Als Polymer kommen Polyester, zum Beispiel Polyethylentherephtalat (PETP), Polybutylentherephtalat (PBTP), Polypropylenterephthalat (PTTP) oder Mischpolymere, sowie Polyamide (PA) in Frage. Diese Polymere werden rein oder dotiert bevorzugt zur Herstellung von Verpackungsmaterialien, wie zum Beispiel Filme und Flaschen oder z. B. zur Herstellung hochviskoser Garne und Fasern verwendet.

Die Polykondensation verschiedenster Monomere und die Erhöhung des Molekulargewichts durch Nachkondensation ist bekannt. Einzelheiten sind zum Beispiel in EP 0 685 502 B1, in Römpp, "Chemie-Lexikon", 10. Auflage, Seite 1316, und in Houben-Weyl, "Methoden der Organischen Chemie", 4. Auflage, Band E20, Teil 1, "Festphasen-Polykondensation (Nachreaktion in fester Phase)" beschrieben. Polykondensationsanlagen werden beschrieben in Ullmanns Encyklopädie der technischen Chemie, 4. Auflage, Band 19, Seite 117 - 119.

Der Erfindung liegt die Aufgabe zugrunde, das eingangs genannte Verfahren weiter zu verbessern und dabei eine kostengünstige Lösung zu finden. Erfindungsgemäß gelingt dies dadurch, dass man stickstoffhaltiges Abgas aus der Polykondensationsanlage dem Behandlungsgas im Volumenverhältnis von 1 : 1 bis 1 : 1000 zumischt, bevor es in die Nachkondensation geleitet wird. Durch die Nachkondensation wird die Kettenlänge der Moleküle üblicherweise um mindestens 20 % und vorzugsweise um mindestens 50% erhöht. Dadurch wird zum Beispiel Polyester-Granulat erzeugt, welches bevorzugt etwa für Flaschen oder Folien verwendbar ist. Mit der Kettenlänge der Moleküle erhöht sich auch die Viskosität (intrinsic viscosity) des Polymers in an sich bekannter Weise.

Durch die Verwendung von stickstoffhaltigem Abgas aus der Polykondensationsanlage kann die Zugabe von frischem Stickstoff von außen, um Leckagen auszugleichen, vermindert werden oder ganz entfallen. Das stickstoffhaltige Abgas aus der Polykondensationsanlage kann auch Kohlenwasserstoffe enthalten und man gibt es dann vorteilhafterweise zusammen mit zurückgeführtem Behandlungsgas zunächst einer Reinigungsstufe auf, wo Kohlenwasserstoffe oxidativ entfernt werden. Das dann in die Nachkondensation geleitete Behandlungsgas ist praktisch frei von O₂ und wird zweckmäßigerweise getrocknet, bevor es in die Nachkondensation eintritt.

Das Behandlungsgas sorgt in der Nachkondensation für die Vergleichmäßigung der Temperatur und den Abtransport der durch chemische Reaktionen gebildeten Nebenprodukte. Es ist zweckmäßig, den Kistallisationsgrad des Polymergranulats vor der Nachkondensation z. B. in Wirbelbett-Kristallisatoren zu erhöhen.

Da das Behandlungsgas vor dem Eintritt in die Nachkondensation durch eine Reinigungsstufe geführt wird, braucht der zum Ergänzen von Verlusten dem Gaskreislauf zugeführte Stickstoff nicht von hoher Reinheit zu sein. Es genügt, dass man dem Behandlungsgas stickstoffreiches Frischgas mit einem N₂-Gehalt von 80 bis 99 Vol.-% zugibt. Dies bedeutet auch an dieser Stelle eine nennenswerte Kostenersparnis.

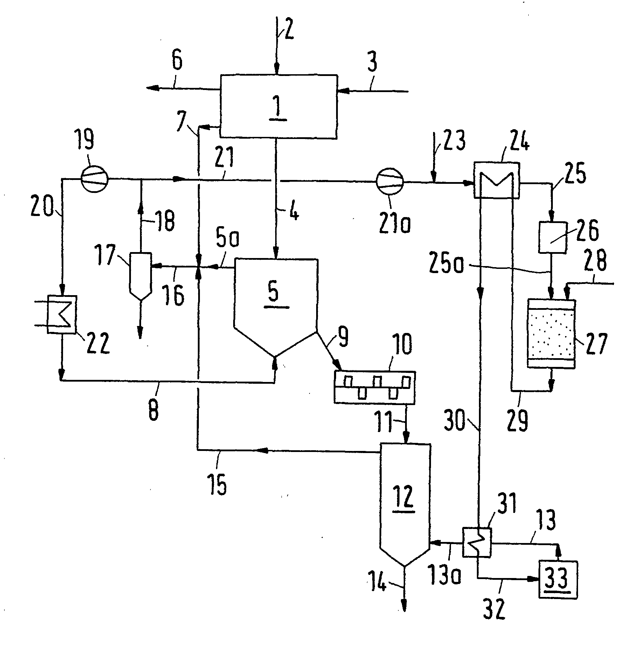

Ausgestaltungsmöglichkeiten des Verfahrens werden mit Hilfe der Zeichnung erläutert, sie zeigt ein Fliesschema des Verfahrens.

Einer an sich bekannten Polykondensationsanlage (1) gibt man durch die Leitung (2) Ausgangschemikalien, im Falle der Polyesterherstellung hauptsächlich Alkohole und Säuren auf und führt durch die Leitung (3) stickstoffreiches Inertgas zu. Als Produkt erhält man Polymergranulat, welches man in der Leitung (4) einer ersten Kristallisationsstufe (5) zuführt. Ein erstes Abgas kommt aus der Leitung (6), es ist O₂-reich, arm an Kohlenwasserstoffen und für die weitere Nutzung im Verfahren nicht geeignet. Ein zweites, O₂-armes Abgas wird in der Leitung (7) abgezogen. Dieses zweite Abgas besteht zu etwa 70 bis 99 Vol.-% aus N₂, es ist relativ O₂-arm und enthält weniger als 10 Vol.-% O₂, daneben kann das zweite Abgas auch noch Kohlenwasserstoffe enthalten, z. B. 1 bis 50 Vol.-% Kohlenwasserstoffe.

Um Verklebungen zu vermeiden, wird das aus der Leitung (4) kommende Polymergranulat zweistufig kristallisiert und in der ersten Stufe (5) z. B. im Wirbelbett mittels stickstoffreichem Fluidisierungsgas aus der Leitung (8) fluidisiert und dabei auf eine erhöhte Temperatur gebracht. Die Temperatur im Wirbelbett liegt im Bereich von 100 bis 250°C und vorzugsweise bei mindestens 150°C. Das Polymergranulat gelangt dann durch die Leitung (9) zur zweiten Kristallisationsstufe (10), die z. B. als Paddelmischer ausgebildet ist, wo das Granulat indirekt erwärmt wird.

Die zweistufige Kristallisation, zumeist mit Temperaturerhöhung in jeder Stufe, sorgt bereits für eine Erhöhung des Kristallisationsgrades, nicht jedoch für eine ausreichende Erhöhung des Molekulargewichts des Polymers. Zur weiteren Erhöhung des Molekulargewichts und damit auch der Viskosität ist der Nachkondensationsreaktor (12) vorgesehen, dem man das Granulat durch die Leitung (11) zuführt. Dem Reaktor (12) führt man durch die Leitung (13a) trockenes, praktisch O₂-freies Behandlungsgas zu, dessen Hauptkomponente Stickstoff ist. Das Behandlungsgas wird aufwärts durch das im Reaktor befindliche Festbett geführt, wobei man die Temperatur vergleichmäßigt und Reaktionsprodukte abführt. Die Verweilzeiten des Granulats im Reaktor (12) liegen üblicherweise im Bereich von 8 bis 22 Stunden. Polymergranulat mit erhöhtem Molekulargewicht zieht man aus dem Reaktor (12) in der Leitung (14) ab und führt es zweckmäßigerweise einer nicht dargestellten Kühlung und Entstaubung zu.

Gebrauchtes Behandlungsgas wird aus dem Nachkondensationsreaktor (12) in der Leitung (15) abgezogen und mit den Gasen der Leitungen (5a) und (7) gemischt. Das gebildete Gasgemisch führt man durch die Leitung (16) zum Entstauben durch einen Zyklon (17) und entstaubtes Gas wird durch die Leitung (18) mit Hilfe der Gebläse (19) und (21a) abgesaugt und auf die Leitungen (20) und (21) verteilt. Das Gas der Leitung (20) gelangt über den Erhitzer (22) und die Leitung (8) zurück in die erste Kristallisationsstufe (5).

Der Gasstrom der Leitung (21) wird nach einer Feinreinigung als Behandlungsgas in den Reaktor (12) zurückgeführt. Zunächst gibt man dem Gas der Leitung (21) durch die Leitung (23) stickstoffreiches Frischgas zu, um Gasverluste auszugleichen. Eine erste Erwärmung erfolgt im indirekten Wärmeaustauscher (24) und dann gibt man das Gas durch die Leitung (25) einem elektrischen Erhitzer (26) auf, um in der Leitung (25a) die gewünschte Eintrittstemperatur für den Oxidationsreaktor (27) zu erreichen. Der Oxidationsreaktor (27) enthält zum Beispiel ein Festbett eines körnigen Oxidationskatalysators (zum Beispiel auf Platin- oder Palladium-Basis), um Kohlenwasserstoffe oxidativ zu beseitigen. Falls notwendig, wird Sauerstoff z. B. in Form von Luft durch die Leitung (28) zugespeist.

Das den Reaktor (27) in der Leitung (29) verlassende Gas hat eine erhöhte Temperatur, die in der Nähe von 400°C liegen kann. Das Gas gibt einen Teil seiner fühlbaren Wärme im Wärmeaustauscher (24) ab und strömt dann durch die Leitung (30) zu einem weiteren Wärmeaustauscher (31), bevor es durch die Leitung (32) einer Trocknung (33) zugeführt wird. Die Trocknung kann zum Beispiel in an sich bekannter Weise adsorbtiv arbeiten. Das getrocknete Gas strömt durch die Leitung (13) zum Wärmeaustauscher (31) und gelangt in der Leitung (13a) als Behandlungsgas in den Reaktor (12). Vorzugsweise weist dieses Behandlungsgas einen Kohlenmonoxid-Gehalt von 10 bis 500 mg/Nm³ auf.

### Beispiel:

In einer konventionellen Polykondensationsanlage (1) erzeugt man aus Terephthalsäure, Isophthalsäure und Ethylenglykol Polyethylentherephtalat (PETP), welches der Zeichnung entsprechend weiterbehandelt wird. Die Veränderung des Polykondensationszustands des PETP-Granulats zeigt Tabelle I:

| **Leitung** | 4 | 9 | 11 | 14 |
|---|---|---|---|---|
| **Molekulargewicht (g/mol)** | 18612 | 18282 | 18754 | 29026 |
| **Intrinsic viscosity (dl/g)** | 0,625 | 0,618 | 0,628 | 0,825 |

Es wird mit einem Wirbelbett-Kristallisator. (5) bei 160°C und einem Paddelkristallisator (10) bei 205°C gearbeitet, die Verweilzeit im Wirbelbett-Kristallisator beträgt 15 Minuten und im Paddelkristallisator 60 Minuten. Im Reaktor (12) befindet sich das Granulat im Festbett. Bei einer Temperatur von 205°C beträgt die Verweilzeit 11 Stunden. Ferner wird ein Elektroerhitzer (26) und eine Absorptionstrocknung (33) mittels Molekularsieb verwendet. Dem Wirbelbett-Kristallisator (5) führt man 7532 kg/h PETP-Granulat von 60°C zu, durch die Leitung (28) wird Luft herangeführt. Gasmengen (kg/h) und Temperaturen °C zeigt Tabelle II:

| **Leitung** | 5a | 7 | 8 | 13a | 15 | 16 | 20 |
|---|---|---|---|---|---|---|---|
| **Gasmenge** | 44100 | 50 | 43600 | 7500 | 6860 | 51010 | 43600 |
| **Temperatur** | 170 | 30 | 215 | 205 | 205 | 177 | 180 |

| **Leitung** | 21 | 23 | 25 | 25a | 29 | 30 | 32 |
|---|---|---|---|---|---|---|---|
| **Gasmenge** | 7310 | 140 | 7400 | 7400 | 7500 | 7500 | 7500 |
| **Temperatur** | 176 | 20 | 371 | 380 | 409 | 318 | 187 |

Gaszusammensetzungen gibt Tabelle III an (in kg/h), dabei bedeutet OK = organische Komponenten.

**Tabelle III**

| **Leitung** | 5a | 7 | 13a | 15 | 21 | 23 | 29 |
|---|---|---|---|---|---|---|---|
| **H**_{**2**}**O** | 158 | 0,5 | - | 0,9 | 26,2 - | | 27 |
| **N**_{**2**} | 43865 | 45,5 | 7500 | 6853,4 | 7271 | 140 | 7473 |
| **OK** | 65,2 | 3 | - | 5,7 | 10,8 - | | - |
| **O**_{**2**} | 11,8 | 1 | - | - | 2,0 | - | - |

## Patentansprüche

1. Verfahren zum Erhöhen des Molekulargewichts eines Polymergranulats, das aus einer Polykondensationsanlage kommt, mindestens teilweise kristallisiert wird und in einer Nachkondensation mit einem stickstoffhaltigen Behandlungsgas in direkten Kontakt gebracht wird, wobei die Temperatur des Polymergranulats in der Nachkondensation gegenüber dem aus der Polykondensationsanlage kommenden Granulat auf 175 bis 250°C erhöht wird, **dadurch gekennzeichnet, dass** man stickstoffhaltiges Abgas aus der Polykondensationsanlage dem Behandlungsgas im Volumenverhältnis von 1 : 1 bis 1 : 1000 zumischt, bevor es in die Nachkondensation geleitet wird.

2. Verfahren nach Anspruch 1, **dadurch gekennzeichnet, dass** das stickstoffhaltige Abgas aus der Polykondensationsanlage Kohlenwasserstoffe enthält und zusammen mit dem Behandlungsgas durch eine Reinigungstufe zum oxidativen Entfernen von Kohlenwasserstoffen geleitet wird, bevor man es in die Nachkondensation leitet.

3. Verfahren nach Anspruch 1 oder 2, **dadurch gekennzeichnet, dass** man dem Behandlungsgas stickstoffreiches Frischgas mit einem N₂-Gehalt von 80 bis 99 Vol.-% zugibt.

4. Verfahren nach Anspruch 1 oder einem der folgenden, **dadurch gekennzeichnet, dass** die Reinigungsstufe zum oxidativen Entfernen von Kohlenwasserstoffen einen Oxidationskatalysator enthält.

5. Verfahren nach Anspruch 1 oder einem der folgenden, **dadurch gekennzeichnet, dass** man aus stickstoffhaltigem Abgas aus der Polykondensationsanlage, Behandlungsgas aus der Nachkondensation und aus der Kristallisation abgezogenem Gas ein Gasgemisch erzeugt, welches man mindestens teilweise als Behandlungsgas verwendet.

## Claims

1. Method for increasing the molecular weight of a granulated polymer which comes from a polycondensation plant, is at least partly crystallized and in a post-condensation is brought into direct contact with a nitrogen-containing treatment gas, the temperature of the granulated polymer in the post-condensation being increased to from 175 to 250°C in relation to the granulated product coming from the polycondensation plant, **characterized in that** nitrogen-containing off-gas from the polycondensation plant is admixed to the treatment gas in a volume ratio of from 1:1 to 1:1000 before the gas is passed to the post-condensation.

2. Method according to Claim 1, **characterized in that** the nitrogen-containing off-gas from the polycondensation plant comprises hydrocarbons and is passed together with the treatment gas through a purification stage for the oxidative removal of' hydrocarbons before the gas is passed to the post-condensation.

3. Method according to Claim 1 or 2, **characterized in that** nitrogen-rich fresh gas having an N₂ content of from 80% to 99% by volume is added to the treatment gas.

4. Method according to Claim 1 or one of the following claims, **characterized in that** the purification stage for the oxidative removal of hydrocarbons comprises an oxidation catalyst.

5. Method according to Claim 1 or one of the following claims, **characterized in that** nitrogen-containing off-gas from the polycondensation plant, treatment gas from the post-condensation and gas taken off from the crystallization are used to produce a gas mixture which is used at least partly as treatment gas.

## Revendications

1. Procédé en vue de l'augmentation du poids moléculaire d'un granulat de polymère, qui provient d'une installation de polycondensation, qui est au moins partiellement cristallisé et qui est mis en contact direct dans une post-condensation avec un gaz de traitement contenant de l'azote, la température du granulat de polymère dans la post-condensation étant augmentée de 175 à 250°C, par rapport à celui provenant de l'installation de polycondensation, **caractérisé en ce que** l'on ajoute par mélange un gaz de rejet contenant de l'azote venant de l'installation de polycondensation au gaz de traitement, dans le rapport volumique de 1 : 1 à 1 : 1000, avant de l'acheminer à la post-condensation.

2. Procédé selon la revendication 1, **caractérisé en ce que** le gaz de rejet contenant de l'azote provenant de l'installation de polycondensation contient des hydrocarbures et est acheminé, conjointement au gaz de traitement, à travers une étape de purification en vue de l'élimination par oxydation des hydrocarbures, avant de l'acheminer à la post-condensation.

3. Procédé selon la revendication 1 ou 2, **caractérisé en ce que** l'on ajoute au gaz de traitement du gaz frais riche en azote avec une teneur en N₂ de 80 à 99 % en volume.

4. Procédé selon la revendication 1, ou l'une des revendications suivantes, **caractérisé en ce que** l'étape de purification contient, en vue de l'élimination par oxydation des hydrocarbures, un catalyseur d'oxydation.

5. Procédé selon la revendication 1 ou l'une des revendications suivantes, **caractérisé en ce que** l'on produit, à partir du gaz de rejet contenant de l'azote provenant de l'installation de polycondensation, du gaz de traitement provenant de la post-condensation et du gaz retiré de la cristallisation, un mélange gazeux que l'on utilise au moins en partie en tant que gaz de traitement.
